# EUROPÄISCHE PATENTSCHRIFT

(11) **EP 0 826 299 B1**
(45) Veröffentlichungstag und Bekanntmachung des Hinweises auf die Patenterteilung: **07.11.2001**
(21) Anmeldenummer: 97112008.4
(22) Anmeldetag: 15.07.1997
(51) Int. Cl.: A01G 3/053

(54) **Heckenschere**
Hedge trimmer
Taille-haie

(30) Priorität: 27.08.1996 DE 19634552
(43) Veröffentlichungstag der Anmeldung: 04.03.1998
(73) Patentinhaber: Metabowerke GmbH & Co., D-72622 Nürtingen (DE)
(72) Erfinder: Bartmann, Klaus, 72639 Neuffen-Kappishäusern (DE); Schulz, Manfred, 72622 Nürtingen (DE); Deibler, Karl Eugen, 72145 Hirrlingen (DE)
(74) Vertreter: Dreiss, Fuhlendorf, Steimle & Becker

(56) Entgegenhaltungen:
- EP-A- 0 622 015
- DE-A- 4 421 746
- US-A- 5 150 523

## Beschreibung

Die Erfindung betrifft eine motorbetriebene Heckenschere mit einem auf der von der Messerleiste abgewandten Seite des Motorgehäuses im wesentlichen gerade erstreckten Stielgriff mit einem ersten Betätigungselement und mit einem weiteren, insbesondere an der der Messerleiste zugewandten Seite des Motorgehäuses vorgesehenen Handgriff mit einem weiteren Betätigungselement, wobei zur Verwirklichung einer 2-Hand-Sicherheitsbedienung beide Betätigungselemente zur Inbetriebnahme der Heckenschere betätigt werden müssen, um dabei einen elektrischen Stromkreis zu schließen.

Eine derartige Heckenschere wird von der Anmelderin vertrieben und ist beispielsweise in ihrem "Hauptkatalog 95/96", Seite 100 dargestellt. Der Stielgriff verläuft im wesentlichen parallel zur Messerleiste und ist einstückig an das Motorgehäuse angeformt. Dieser Stielgriff wird zur Inbetriebnahme der Heckenschere mit einer Hand umgriffen, während die andere Hand des Benutzers den vorderen als Bügelgriff ausgebildeten weiteren Handgriff umfaßt, wobei zur Inbetriebnahme beide Betätigungselemente gegen den jeweiligen Handgriff gedrückt werden.

Der vorliegenden Erfindung liegt die Aufgabe zugrunde, die vorbekannte Heckenschere dahingehend zu verbessern, daß die Länge der Messerleiste besser oder effektiver zum Schneiden von körperfernen Bereichen einer Hecke oder eines Strauchs, insbesondere im Überkopfbetrieb der Heckenschere genutzt werden kann.

Diese Aufgabe wird bei einer Heckenschere der eingangs beschriebenen Art dadurch gelöst, daß der Stielgriff auf der in seiner Längsrichtung vom Motorgehäuse abgewandten Seite des ersten Betätigungselements und in einem Abstand zu diesem ein zweites Betätigungselement aufweist, so daß ein Benutzer der Heckenschere den Stielgriff auch mit beiden Händen in Längsrichtung hintereinander umgreifen und mit der vorne greifenden Hand das erste und mit der hinten greifenden Hand das zweite Betätigungselement betätigen kann, in welchem Fall der elektrische Schalter zur Inbetriebnahme der Heckenschere auch geschlossen wird, und daß der Abstand oder die Betätigungsrichtung des ersten und zweiten Betätigungslements derart ist, daß nicht beide Betätigungselemente mit einer Hand betätigt werden können.

Dadurch, daß der Stielgriff der erfindungsgemäßen Heckenschere mit beiden Händen eines Benutzers umgriffen und am Stielgriff hintereinander das erste und ein zweites Betätigungselement vorgesehen sind, wird die Reichweite der Heckenschere für einen Benutzer vergrößert. Da bei der vorbekannten Heckenschere stets der vordere Bügelgriff umgriffen und das dort vorgesehene weitere Betätigungselement gedrückt werden mußte, war die Reichweite der Heckenschere durch die Sicherheits-2-Hand-Bedienung durch die Reichweite der den Bügelgriff haltenden Hand des Benutzers begrenzt. Die erfindungsgemäße Heckenschere kann demgegenüber in besonders vorteilhafter Weise insbesondere im Überkopfbereich mit beiden Händen an ihrem Stielgriff gegriffen und geführt werden, so daß die Reichweite gegenüber der vorbeschriebenen Heckenschere, die mit einer Hand an dem Bügelgriff gehalten werden mußte, vergrößert ist.

Aus der DE 44 21 746 A1 ist eine ebenfalls mit einer 2-Hand-Sicherheitsbedienung ausgerüstete Heckenschere bekannt, bei der auf der von der Messerleiste abgewandten Seite des Motorgehäuses zwei Betätigungselemente zur Inbetriebnahme der Heckenschere vorgesehen sind. Ein Stielgriff ist bei dieser Heckenschere jedoch nicht vorgesehen, sondern es sind zwei von einem oberen bzw. unteren Bereich des Motorgehäuses weglaufende und an ihren Enden miteinander verbundene Griffabschnitte vorgesehen. Die Handhabbarkeit dieser Heckenschere mit im Winkel zueinander verlaufenden Griffabschnitten ist jedoch nicht befriedigend. Es besteht die Gefahr, daß ein Benutzer an der der Hecke zugewandten Hand durch Stacheln oder Dornen verletzt wird.

Auch bei der erfindungsgemäßen Heckenschere ist eine 2-Hand-Sicherheitsbedienung vorgesehen. Um auszuschließen, daß-beabsichtet und unbeabsichtigt - beide Betätigungselemente mit nur einer Hand betätigt werden können, hat es sich als vorteilhaft erwiesen, daß das zweite Betätigungselement einen Betätigungsweg aufweist, der in einem Winkel zu dem Betätigungsweg des ersten Betätigungselements steht, wobei der Winkel vorzugsweise im Bereich von 90 ° oder darüber liegt.

Zusätzlich oder anstelle dieser Maßnahme ist es möglich und vorteilhaft, die Betätigungselemente in einem solchen Abstand voneinander am Stielgriff vorzusehen, daß eine Betätigung beider Elemente mit nur einer Hand sicher ausgeschlossen werden kann.

In Weiterbildung der Erfindung von besonderer Bedeutung ist das zweite Betätigungselement von einem Schieber gebildet, dessen Verschieberichtung in Längsrichtung des Stielgriffs verläuft.

Der Schieber ist vorteilhafterweise in Richtung auf das Motorgehäuse vorgespannt und wird zur Inbetriebnahme der Heckenschere vom Motorgehäuse weg in Richtung auf das Ende des Stielgriffs verschoben.

Der Schieber weist vorteilhafterweise einen im wesentlichen senkrecht zur Längsrichtung des Stielgriffs verlaufenden Wandabschnitt auf, gegen den beim Umgreifen des Stielgriffs mit der Hand der kleine Finger oder die Handkante eines Benutzers anlegbar ist. Der Schieber wird betätigt, indem ein Benutzer seine Hand in Längsrichtung des Stielgriffs drückt.

Hierfür geht der Wandabschnitt in einer ergonomisch an die Hand- bzw. Fingerform angepaßten Rundung in einen in Längsrichtung des Stielgriffs verlaufenden Schaftbereich über, gegen den die Handinnenseite eines Benutzers anliegt und den Stielgriff umgreift.

Das zweite Betätigungselement steht in vorteilhafter Weise über ein zugübertragendes Verbindungselement mit einem Ende einer Wippe in Wirkverbindung und verlagert im betätigten Zustand das Ende der Wippe in Richtung auf den elektrischen Schalter.

Nach einer bevorzugten Ausführungsform der Erfindung ist das andere Ende der Wippe auf einer Wirkfläche des ersten Betätigungselements abgestützt und im betätigten Zustand des zweiten Betätigungselements um dieses Auflager verschwenkt. Wird jeweils nur das erste oder das zweite Betätigungselement betätigt, so ist die Wippe von dem elektrischen Schalter beabstandet und dieser demzufolge geöffnet. Werden beide Betätigungselemente betätigt, so berührt die Wippe den elektrischen Schalter, so daß dieser geschlossen und eine Stromzufuhr zum Elektromotor der Heckenschere bewirkt wird.

In weiterer Ausbildung der Erfindung ist die Wippe in Richtung auf ihre Ausgangsposition vorgespannt, so daß sie bei Loslassen des ersten und/oder des zweiten Betätigungselements sofort von dem elektrischen Schalter wegbewegt und eine Unterbrechung der Stromversorgung des Elektromotors bewirkt wird.

Weitere Merkmale, Einzelheiten und Vorteile der Erfindung ergeben sich aus den beigefügten Schutzansprüchen und aus der zeichnerischen Darstellung und nachfolgenden Beschreibung einer bevorzugten Ausführungsform der erfindungsgemäßen Heckenschere. In der Zeichnung zeigt die Figur einen Längsschnitt durch eine erfindungsgemäß ausgebildete Heckenschere.

Die Figur zeigt eine insgesamt mit dem Bezugszeichen 2 bezeichnete Heckenschere im Bereich des Maschinengehäuses 4 und des Stielgriffs 6 mit nur ansatzweise dargestellter Messerleiste 8. Der Stielgriff 6 ist einstückig mit dem Maschinengehäuse 4 in Form zweier aneinandergefügter Kunststoffhalbschalen ausgebildet. Vom Ende des Stielgriffs 6 erstreckt sich ein Handschutzbügel 10 zum Motorgehäuse 4 zurück. Hierdurch wird die den Stielgriff 6 umgreifende Hand eines Benutzers vor spitzigen Ästen oder Dornen geschützt, und der Handbügel 10 trägt noch eine an sich bekannte Kabelfixiereinrichtung 12, um einen von seinem freien Ende in Längsrichtung des Stielgriffs 6 in das Innere des Stielgriffs eingesetzten und montierten Kabelabschnitt vor Zugspannungen zu schützen. An dem Stielgriff 6 ist ein erstes Betätigungselement 14 in Form einer langgestreckten, an einem Schwenkpunkt 16 angelenkten und im wesentlichen quer zur Längsrichtung des Stielgriff 6 betätigbaren Schwenktaste angeordnet. Auf der von dem Motorgehäuse 4 abgewandten Seite des ersten Betätigungselements 14 ist ein zweites Betätigungselement 18 in Form eines im wesentlichen in Längsrichtung des Stielgriffs 6 bewegbaren Schiebers 20 vorgesehen, der einen quer zur Verschieberichtung verlaufenden Wandabschnitt 21 aufweist, der eine Drückerfläche bildet. Desweiteren ist auf der der Messerleiste 8 zugewandten Seite des Maschinengehäuses 4 ein weiterer bügelförmiger Handgriff 22 mit einem weiteren der Bügelform angepaßten Betätigungselement dargestellt.

Zur Inbetriebnahme der Heckenschere muß entweder das erste Betätigungselement 14 und das weitere Betätigungselement an dem Bügelgriff 22 oder das erste und das zweite Betätigungselement 14, 18 betätigt werden, um einen elektrischen Schalter 24 zu schließen, damit ein nicht näher beschriebener Elektromotor 26 mit Strom versorgt wird. Hierfür ist eine mit den Betätigungselementen 14 und 18 und dem Betätigungselement in dem vorderen Bügelgriff 22 zusammenwirkende Wippe 28 vorgesehen. Die Wippe 28 ist einenends über ein zu übertragendes Verbindungselement 30 mit dem in Längsrichtung des Stielgriffs verschiebbaren Schieber 20 verbunden. Sie stützt sich mit ihrem anderen Ende auf einer Wirkfläche 32 der Schwenktaste ab. Schließlich liegt die Wippe 28 im Bereich eines mittleren knieartig abgebogenen Abschnitts 34 auf einer scheitelförmig gewölbten Auflagerfläche 36 eines drehfest mit dem weiteren Betätigungselement am vorderen Bügelgriff 22 verbundenen Kipphebels auf.

Wird, ausgehend von der in der Figur dargestellten Ausgangslage der Wippe 28 im nicht betätigten Zustand der Heckenschere das erste Betätigungselement 14 gedrückt, so würde die Wippe 28 um die scheitelförmige Auflagerfläche 36 verschwenken, wodurch der knieartig abgebogene Abschnitt 34 der Wippe 28 in einen komplementär ausgebildeten Falzbereich 40 des Schwenkhebels hineingleitet und sich dort abstützt. Wird jetzt zusätzlich das weitere Betätigungselement am vorderen Handbügelgriff 22 gedrückt, so wird die Wippe um ihren Auflagerpunkt auf der Wirkfläche 32 des ersten Betätigungselements 14 entgegen der Richtung des Uhrzeigersinnes verschwenkt, so daß das andere Ende der Wippe 28 einen Drücker 42 des Schalters 24 betätigt, wodurch dieser geschlossen wird, und die Heckenschere in Betrieb gesetzt wird.

Wird bei gedrücktem ersten Betätigungselement 14 der Schieber 20 (mit der anderen Hand eines Benutzers) vom Maschinengehäuse 4 weg verschoben, so wird über das Verbindungselement 30 die Wippe 28 wiederum entgegen dem Uhrzeigersinn um ihr Auflager auf der Wirkfläche 32 verschwenkt und dadurch der Drücker 42 des Schalters 24 betätigt. Wird nun die Schwenktaste oder der Schieber 20 losgelassen und aufgrund der Wirkung von Rückstellfedern 44 und 46 in ihre Ausgangsposition zurückgedrückt, so kommt auch die Wippe von dem Drücker 42 frei, wodurch der Schalter 24 geöffnet und die Stromzufuhr unterbrochen wird. Um eine sichere und sofortige Rückstellung der Wippe 28 zu gewährleisten, ist ein Rückstellelement 48 in Form eines Bolzens 50 mit einem Bundabschnitt 51 an seinem freien Ende vorgesehen. Der Rückstellbolzen 50 bzw. seine Feder 52 wird aber erst bei Betätigen von jeweils zwei Betätigungselementen aktiviert bzw. ausgelenkt.

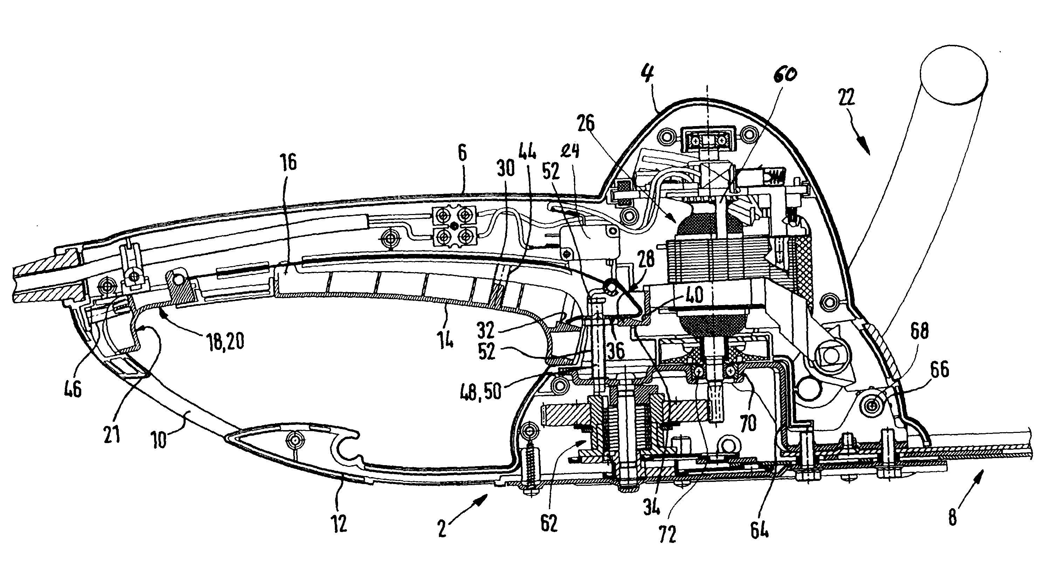

Um das Gewicht der Heckenschere zu reduzieren, ist anstelle eines verhältnismäßig massiven, spanend bearbeiteten metallischen Gehäuses zur Lagerung der Ankerwelle 60, des Getriebes 62 und/oder der Messerleiste 8 oder des Messerträgers 1 ein aus einem flächenhaften Blechteil geformtes Stanz-, Biege- bzw. Ziehteil 64 vorgesehen. Dieses Teil 64 weist in der Schnittansicht nach Fig. 1 zwei senkrechte Abbiegungen auf. Es sind desweiteren zwei senkrecht zur Ebene der Messerleiste 8 verlaufende und Stützflächen bildende Lappen 66 ausgebildet, mit dem sich das Teil 64 an den Gehäuseschalen abstützt. Zur definierten Anordnung an der Gehäuseschale ist in wenigstens einem der Lappen 66 eine gestanzte Öffnung 68 ausgebildet, durch welche ein an der Gehäuseschale angeformter Vorsprung hindurchgreift. In dem Teil 64 sind topfförmige Ausprägungen 70 vorgesehen, welche einerseits das Teil 64 verstärken und andererseits eine Aufnahme für ein Lager 72 bilden.

## Patentansprüche

1. Motorbetriebene Heckenschere mit einem auf der von der Messerleiste (8) abgewandten Seite des Motorgehäuses (4) im wesentlichen gerade erstreckten Stielgriff (6) mit einem ersten Betätigungselement (14) und mit einem weiteren, insbesondere an der der Messerleiste zugewandten Seite des Motorgehäuses (4) vorgesehenen Handgriff (22) mit einem weiteren Betätigungselement, wobei zur Verwirklichung einer Zweihandsicherheitsbedienung beide Betätigungselemente zur Inbetriebnahme der Heckenschere betätigt werden müssen, um dabei einen elektrischen Schalter (24) zu schließen, **dadurch gekennzeichnet, daß** der Stielgriff (6) auf der in seiner Längsrichtung vom Motorgehäuse (4) abgewandten Seite des ersten Betätigungselementes (14) und in einem Abstand zu diesem ein zweites Betätigungselement (18) aufweist, so daß ein Benutzer der Heckenschere den Stielgriff (6) auch mit beiden Händen in Längsrichtung hintereinander umgreifen und mit der vorne greifenden Hand das erste und mit der hinten greifenden Hand das zweite Betätigungselement betätigen kann, wodurch der elektrische Schalter (24) zur Inbetriebnahme der Heckenschere auch geschlossen wird, und daß der Abstand oder die Betätigungsrichtung des ersten (14) und zweiten (18) Betätigungselements derart ist, daß nicht beide Betätigungselemente mit einer Hand betätigt werden können.

2. Heckenschere nach Anspruch 1, **dadurch gekennzeichnet, daß** das zweite Betätigungselement (18) einen Betätigungsweg aufweist, der in einem Winkel zu einem Betätigungsweg des ersten Betätigungselements (14) steht.

3. Heckenschere nach Anspruch 1 oder 2, **dadurch gekennzeichnet, daß** das zweite Betätigungselement (18) ein Schieber (20) ist, dessen Verschieberichtung in Längsrichtung des Stielgriffs (6) verläuft.

4. Heckenschere nach Anspruch 3, **dadurch gekennzeichnet, daß** der Schieber (20) in Richtung auf das Motorgehäuse (4) vorgespannt ist und zur Inbetriebnahme der Heckenschere vom Motorgehäuse weg in Richtung auf das Ende des Stielgriffs (6) verschoben wird.

5. Heckenschere nach Anspruch 3 oder 4, **dadurch gekennzeichnet, daß** der Schieber (20) einen im wesentlichen senkrecht zur Längsrichtung des Stielgriffs (6) verlaufenden Wandabschnitt (21) aufweist, gegen den beim Umgreifen des Stielgriffs mit der Hand der kleine Finger oder die Handkante anlegbar ist.

6. Heckenschere nach Anspruch 5, **dadurch gekennzeichnet, daß** der Wandabschnitt (21) in einer ergonomisch an die Hand-bzw. Fingerform angepaßten Rundung in einen in Längsrichtung des Stielgriffs (6) verlaufenden Bereich übergeht, gegen den die Handinnenseite eines Benutzers anliegt.

7. Heckenschere nach Anspruch 6, **dadurch gekennzeichnet, daß** das zweite Betätigungselement (18) über ein zugübertragendes Verbindungselement (30) mit einem Ende einer Wippe (28) in Wirkverbindung steht und im betätigten Zustand das Ende der Wippe (28) in Richtung auf den elektrischen Schalter (24) verlagert.

8. Heckenschere nach Anspruch 7, **dadurch gekennzeichnet, daß** da andere Ende der Wippe (28) auf einer Wirkfläche (32) des ersten Betätigungselements (14) abgestützt ist und im betätigten Zustand des zweiten Betätigungselements (18) um dieses Auflager verschwenkt ist.

9. Heckenschere nach Anspruch 8, **dadurch gekennzeichnet, daß** bei Betätigen des ersten Betätigungselements (14) die Wippe (28) in Richtung auf den elektrischen Schalter 24 verlagert wird.

10. Heckenschere nach Anspruch 7, 8 oder 9, **dadurch gekennzeichnet, daß** die Wippe (28) in Richtung auf ihre Ausgangsposition von dem elektrischen Schalter (24) weg vorgespannt ist, so daß sie bei Loslassen des ersten und/oder des zweiten Betätigungselements (14, 18) sofort eine Unterbrechnung der Stromversorgung des Motors bewirkt.

11. Heckenschere nach einem der Ansprüche 7 bis 9, **dadurch gekennzeichnet, daß** die Vorspannung der Wippe (28) von einem durch eine Öffnung in der Wippe spielbehaftet hindurchgreifenden und von einer Feder vorgespannten Mitnehmerstift bewirkt werden.

12. Heckenschere nach Anspruch 11, **dadurch gekennzeichnet, daß** die Vorspannung der Wippe (14, 18) nur bei Betätigung des ersten und zweiten Betätigungselements (14, 18) bzw. bei Betätigung des ersten oder zweiten und des weiteren Betätigungselements an dem messerseitigen Handgriff (22) aktiviert wird.

13. Heckenschere nach einem der vorgenannten Ansprüche, **dadurch gekennzeichnet, daß** zur Lagerung einer Ankerwelle (60) und/oder eines Getriebes (62) und/oder der Messerleiste (8) oder eines Messerträgers ein aus einem flachen Blechteil geformtes Stanz-, Biege- oder Ziehteil (64) vorgesehen ist.

## Claims

1. Motor-driven hedge trimmer with a handle (6) extending substantially straight on the side of the motor housing (4) remote from the blade strip (8) with a first actuating element (14) and with a further handle (22) provided, in particular, on the side of the motor housing (4) facing the blade strip and with a further actuating element wherein, to achieve two-handed safe operation, the two actuating elements have to be actuated to start up the hedge cutters, to close an electric switch (24), in the process, **characterised in that** the handle (6) on the side of the first actuating element (14) remote from the motor housing (4) in its longitudinal direction has a second actuating element (18), at a distance therefrom, so a user of the hedge trimmer can also grasp the handle (6) with both hands one behind the other in longitudinal direction and can actuate the first actuating element with the front grasping hand and can actuate the second actuating element with the back grasping hand, so the electric switch (24) for starting up the hedge trimmer is also closed, and **in that** the spacing or the actuating direction of the first (14) and second (18) actuating element is such that the two actuating elements cannot be actuated with one hand.

2. Hedge trimmer according to claim 1, **characterised in that** the second actuating element has an actuating path which is at an angle to an actuating path of the first actuating element (14).

3. Hedge trimmer according to claim 1 or 2, **characterised in that** the second actuating element (18) is a slide (20), the direction of displacement of which extends in the longitudinal direction of the handle (6).

4. Hedge trimmer according to claim 3, **characterised in that** the slide (20) is biased in the direction of the motor housing (4) and is displaced away from the motor housing in the direction of the end of the handle (6) to start up the hedge trimmer.

5. Hedge trimmer according to claim 3 or 4, **characterised in that** the slide (20) has a wall portion (21) extending substantially perpendicular to the longitudinal direction of the handle (6), against which wall portion (21) the little finger or the edge of hand can be rested when the handle is enclosed by the hand.

6. Hedge trimmer according to claim 5, **characterised in that** the wall portion (21) in a rounded part ergonomically adapted to the hand or finger shape passes into a region extending in the longitudinal direction of the handle (6), against which region the inner side of the hand of a user rests.

7. Hedge trimmer according to claim 6, **characterised in that** the second actuating element (18) co-operates with one end of a rocker (28) via a pull-transmitting connecting element (30) and, in the actuated state, displaces the end of the rocker (28) towards the electric switch (24).

8. Hedge trimmer according to claim 7, **characterised in that** the other end of the rocker (28) is supported on an active face (32) of the first actuating element (14) and, in the actuated state of the second actuating element (18), is pivoted about this support.

9. Hedge trimmer according to claim 8, **characterised in that** the rocker (28) is displaced towards the electric switch (24) when the first actuating element (14) is actuated.

10. Hedge trimmer according to claim 7, 8 or 9, **characterised in** the rocker (28) is biased towards its starting position away from the electric switch (24), so the power supply to the motor is immediately interrupted upon release of the first and/or the second actuating element (14, 18),

11. Hedge trimmer according to any one of claims 7 to 9, **characterised in that** the bias of the rocker (28) is produced by a driving pin which protrudes with play through an opening in the rocker and is biased by a spring.

12. Hedge trimmer according to claim 11, **characterised in that** the bias of the rocker (14, 18) is only activated upon actuation of the first and second actuating element (14, 18) or on actuation of the first or second and the further actuating element on the handle (22) on the blade side.

13. Hedge trimmer according to any one of the preceding claims, **characterised in that** a punched, bent or deep-drawn part (64) formed from a flat sheet metal part is provided for mounting a rotor shaft (60) and/or a gearing (62) and/or the blade strip (8) or a blade support.

## Revendications

1. Taille-haie motorisé comprenant sur la face du carter de moteur (4) opposée à la réglette des lames (8) une poignée à manche (6) de forme essentiellement droite avec un premier organe de commande (14) et une autre poignée (22) prévue notamment sur la face du carter de moteur (4) en regard de la réglette des lames avec un autre organe de commande, la commande de sécurité à deux mains nécessitant l'actionnement des deux organes de commande pour mettre en service le taille-haie et pour fermer un interrupteur électrique (24), **caractérisé en ce que** la poignée à manche (6) présente sur la face du premier organe de commande (14) opposée dans son sens longitudinal au carter de moteur (4), et à distance de celui-ci, un deuxième organe de commande (18) de telle sorte que l'utilisateur du taille-haie peut saisir la poignée à manche (6) avec les deux mains l'une derrière l'autre, dans le sens longitudinal, qu'il peut commander avec la main avant le premier organe de commande et avec la main arrière le deuxième organe de commande, ce qui entraîne la fermeture de l'interrupteur électrique (24) pour la mise en service du taille-haie, et que la distance ou le sens de commande du premier (14) et du deuxième (18) organes de commande sont tels que les deux organes de commande ne peuvent pas être actionnés par une seule main.

2. Taille-haie selon la revendication 1, **caractérisé en ce que** le deuxième organe de commande (18) présente une course d'action angulaire par rapport à la course d'action du premier organe de commande (14).

3. Taille-haie selon la revendication 1 ou 2, **caractérisé en ce que** le deuxième organe de commande (18) est un coulisseau (20) qui se déplace dans le sens longitudinal de la poignée à manche (6).

4. Taille-haie selon la revendication 3, **caractérisé en ce que** le coulisseau (20) est précontraint en direction du carter de moteur (4) et qu'il se déplace, pour la mise en marche du taille-haie, à partir du carter de moteur vers l'extrémité de la poignée à manche (6).

5. Taille-haie selon la revendication 3 ou 4, **caractérisé en ce que** le coulisseau (20) présente une section de paroi (21) essentiellement verticale par rapport au sens longitudinal de la poignée à manche (6), contre laquelle peut s'appuyer le petit doigt ou le bord de la main au moment de la saisie de la poignée à manche.

6. Taille-haie selon la revendication 5, **caractérisé en ce que** la section de paroi (21) passe, dans le sens longitudinal de la poignée à manche (6), dans une zone qui présente une rondeur ergonomiquement adaptée à la forme de la main, respectivement du doigt, contre laquelle l'intérieur de la main de l'utilisateur est en appui.

7. Taille-haie selon la revendication 6, **caractérisé en ce que** le deuxième organe de commande (18) coopère, par un élément de liaison (30) transmettant l'effort de traction, avec l'extrémité d'une bascule (28) et qu'il déplace, en état actionné, l'extrémité de la bascule (28) vers l'interrupteur électrique (24).

8. Taille-haie selon la revendication 7, **caractérisé en ce que** l'autre extrémité de la bascule (28) est en appui sur une surface active (32) du premier organe de commande (14) et qu'il pivote, en état actionné du deuxième organe de commande (18), autour de ce support.

9. Taille-haie selon la revendication 8, **caractérisé en ce que** la bascule (28) se déplace vers l'interrupteur électrique (24) lorsque le premier organe de commande (14) est actionné.

10. Taille-haie selon les revendications 7, 8 ou 9, **caractérisé en ce que** la bascule (28) est précontrainte vers sa position initiale en s'écartant de l'interrupteur électrique (24), de telle sorte qu'elle provoque immédiatement une coupure de l'alimentation électrique lorsque le premier et/ou le deuxième organe(s) de commande (14, 18) est/sont relâché(s).

11. Taille-haie selon l'une des revendications 7 à 9, **caractérisé en ce que** la précontrainte de la bascule (28) est provoquée par un doigt d'entraînement passant avec jeu par une ouverture dans la bascule et qui est précontraint par un ressort.

12. Taille-haie selon la revendication 11, **caractérisé en ce que** la précontrainte de la bascule (28) n'est activée que lors de l'actionnement des premier et deuxième organes de commande (14, 18) ou lors de l'actionnement du premier ou du deuxième ou d'un autre organe de commande disposé sur la poignée (22) côté lame.

13. Taille-haie selon l'une des revendications précédentes, **caractérisé en ce qu'**une pièce de découpage, de cintrage ou de tirage (64) formée à partir d'une tôle plate est prévue pour le logement d'un arbre d'induit (60) et/ou d'une transmission (62) et/ou de la réglette de lames (8) ou d'un support de lames.
